# EUROPÄISCHE PATENTSCHRIFT

(11) **EP 1 908 082 B1**
(45) Veröffentlichungstag und Bekanntmachung des Hinweises auf die Patenterteilung: **13.04.2016**
(21) Anmeldenummer: 06777921.5
(22) Anmeldetag: 24.07.2006
(51) Int. Cl.: H01B 17/50, H01B 19/04, H01B 3/44, H01M 8/24

(54) **ISOLATOR MIT ERHÖHTER ISOLATIONSFÄHIGKEIT**
INSULATOR WITH INCREASED INSULATION CAPABILITY
ISOLATEUR AVEC UNE CAPACITÉ AUGMENTÉE D'ISOLATION

(30) Priorität: 25.07.2005 EP 05016096
(43) Veröffentlichungstag der Anmeldung: 09.04.2008
(73) Patentinhaber: Siemens Aktiengesellschaft, 80333 München (DE)
(72) Erfinder: HARTNACK, Herbert, 91056 Erlangen (DE); MEHLTRETTER, Igor, 91054 Buckenhof (DE)
(86) Internationale Anmeldenummer: PCT/EP2006/064562
(87) Internationale Veröffentlichungsnummer: WO 2007/012627

(56) Entgegenhaltungen:
- WO-A-2004/105172
- DE-A1- 1 814 498
- DE-A1- 19 835 916
- GB-A- 1 598 951
- GB-A- 1 603 765
- GB-A- 2 058 482
- GB-A- 2 065 386

## Beschreibung

Die Erfindung betrifft einen Isolator mit erhöhter Isolationsfähigkeit gemäß Patentanspruch 1.

Isolatoren werden üblicherweise zur Befestigung, Halterung oder Lagerung erster, strom- bzw. spannungsführender Bauteile an bzw. in zweiten Bauteilen wie z.B. Gehäusen, Gerüsten, Trägern etc. verwendet, wenn ein Stromfluss zwischen dem ersten, strom- bzw. spannungsführenden Bauteil und dem zweiten Bauteil verhindert werden soll.

Oftmals muss hierbei aus Sicherheitsgründen ein definierter Isolationswiderstand des Isolators gewährleistet werden. Beispielsweise muss bei einem in einem Gehäuse oder Behälter gelagerten elektrischen Gerät, z.B. bei einem in einem Druckbehälter gelagerten Brennstoffzellenmodul, ein hoher Isolationswiderstand zwischen dem Gehäuse oder Behälter und den elektrischen Anschlüssen des Gerätes sichergestellt werden. Die elektrisch leitenden Teile des Gerätes werden deshalb zur Befestigung, Halterung oder Lagerung über Isolatoren mit dem Gehäuse oder Behälter verbunden. Bei manchen Anlagen bzw. Geräten wird der Isolationswiderstand zwischen dem Gehäuse oder Behälter und den elektrischen Anschlüssen permanent überwacht und bei Unterschreitung eines Grenzwertes die Anlage bzw. das Gerät abgeschaltet.

Wenn sich Isolatoren in einer Umgebung mit einem Temperaturwechsel von heiss nach kalt befinden, kondensiert bei Abkühlung der Umgebung in der Umgebungsatmosphäre befindliche Feuchtigkeit aus und schlägt sich auf den Isolatoren nieder. Die niederschlagende Feuchtigkeit bildet auf den Isolatoren Wassertropfen, die sich zu einem die Oberfläche benetzenden Wasserfilm verbinden. Hierdurch entstehen elektrisch leitende Wasserbrücken über den Isolationsstrecken, d.h. entlang der Oberflächen der Isolatoren zwischen den zu isolierenden Bauteilen, wodurch sich der Isolationswiderstand beispielsweise um einen Faktor von 10 oder mehr reduzieren kann.

Aus Sicherheitsgründen werden deshalb die Isolationsstrecken meist so lange ausgeführt, dass die Wasserstrecken keine erhebliche Reduktion des Isolationswiderstandes bewirken.

Weitere Maßnahmen zur Verhinderung zu geringer Isolationswiderstände bestehen darin, ein Auskondensieren von Feuchtigkeit durch Trocknen der Atmosphäre mit Hilfe einer Trocknungseinrichtung zu verhindern oder einen Betrieb des Gerätes im kalten Zustand nicht zu erlauben.

Aus der DE 198 35 915 A1 ist ein Isolator gemäß Oberbegriff des Patentanspruchs 1 bekannt. Der Isolator besteht aus einem Formkörper aus Keramik und einer auf der Oberfläche des Formkörpers aufgebrachten hydrophoben Beschichtung, wobei die hydrophobe Beschichtung aus einem Plasmapolymer besteht. Das Plasmapolymer wird dabei durch Plasmaabscheidung aus einem unpolaren oder unpolare Gruppen aufweisenden Gas erzeugt. Mit einem derartigen Isolator kann ein günstiges Langzeitverhalten hinsichtlich des elektrischen Isolationsvermögens bei Oberflächenverschmutzungen des Isolators (beispielsweise bei Ablagerung von Industriestaub, Salzen oder durch das Abscheiden von gelösten Partikeln beim Verdunsten von auf der Oberfläche niedergeschlagener Flüssigkeit) erreicht werden.

Ausgehend hiervon ist es Aufgabe vorliegender Erfindung, einen Isolator anzugeben, der auch bei einem Einsatz unter wechselnden Umgebungstemperaturen einen hohen Isolationswiderstand gewährleistet, ohne dass die Isolationsstrecken vergrößert, zusätzliche Trocknungseinrichtungen vorgesehen oder Betriebseinschränkungen vorgenommen werden müssen.

Die Lösung dieser Aufgabe gelingt erfindungsgemäß mit einem Isolator gemäß Patentanspruch 1. Vorteilhafte Ausgestaltungen sind Gegenstand der Unteransprüche 2 bis 3. Vorteilhafte Verwendungen des Isolators sind Gegenstand der Ansprüche 4 bis

6. Eine elektrische Einrichtung mit einem derartigen Isolator ist Gegenstand der Patentansprüche 7 bis 13. Ein Verfahren zur Herstellung eines derartigen Isolators ist Gegenstand des Anspruchs 14.

Die hydrophobe Oberfläche des Isolators bewirkt, dass die kondensierten Wassertropfen entweder von der Oberfläche des Isolators abtropfen oder, wenn sie nicht abtropfen, dann nur vereinzelt auf der Oberfläche ohne Verbindung zu anderen Wassertropfen verbleiben. Ein durchgehender Wasserfilm und somit eine Reduzierung des Isolationswiderstand kann somit sicher verhindert werden. Hierdurch kann ein hoher Isolationswiderstand auch bei einer Abkühlung des Gerätes und damit verbundener Kondensation der Feuchtigkeit beibehalten werden. Es können somit kurze Isolationsstrecken realisiert werden. Auf eine Trocknung der Atmosphäre oder eine Sicherheitsabschaltung bei Abkühlung kann verzichtet werden.

Erfindungsgemäß besteht der Isolator aus einem isolierenden, vorzugsweise nicht hydrophoben, Material mit einer hydrophoben Oberflächenbeschichtung. Da nur die Oberflächenbeschaffenheit wesentlich für den gewünschten Effekt ist, muss nicht der gesamte Isolator aus einem hydrophoben Material bestehen, vielmehr kann für den Isolator ein z.B. hinsichtlich seiner mechanischen und isolierenden Eigenschaften optimales und hinsichtlich seiner hydrophoben Eigenschaften weniger optimales Material (z.B. Keramik, Kunststoff) gewählt werden, das an seiner Oberfläche mit einem hinsichtlich der hydrophoben Eigenschaften optimalen Material beschichtet ist.

Gemäß der Erfindung besteht die hydrophobe Oberflächenbeschichtung aus einem in einem Lösemittel lösbaren hydrophoben Material. Ein derartiges Material kann in gelöstem Zustand, z.B. durch Aufstreichen, sehr einfach auf den Isolatorkern aufgebracht werden und ermöglicht die Herstellung besonders dünner Oberflächenbeschichtungen.

Erfindungsgemäß besteht das lösbare, hydrophobe Material ganz oder teilweise aus einem amorphen Fluoropolymer. Dieses Material weist gleichzeitig einen guten Isolationswiderstand und eine gute Haftbarkeit auf verschiedensten Isolatormaterialen auf. Gegebenenfalls ist vor der Beschichtung nur eine entsprechende Oberflächenbehandlung durchzuführen.

Unter den amorphen Fluoropolymeren eignen sich insbesondere amorphe Modifikationen von Teflon. Diese Materialien können in geeigneten Lösungsmitteln bezogen und vor Gebrauch auf eine optimale Konzentration verdünnt werden. Die Lösung kann dann durch ein übliches Aufbringverfahren wie Sprühen, Wischen, Pinseln, Tauchen, Drucken auf das isolierende, nicht hydrophobe Material aufgebracht, das Lösungsmittel verdampft und das verbleibende hydrophobe Material ggf. durch einen Temperaturschritt bei erhöhter Temperatur auf der Korrosionsschutzschicht immobilisiert werden. Nach dem Verdampfen des Lösungsmittels bleibt ein sehr dünner Teflonfilm auf der Oberfläche des Isolators zurück.

Der erfindungsgemäße Isolator eignet sich grundsätzlich sehr gut zur (isolierten) Lagerung oder Befestigung eines elektrischen Bauteiles in bzw. an einem Gehäuse. Beispiele hierfür sind gekapselte Elektromotoren, Leistungsschalter, Leistungssteller oder Trocken-Transformatoren. Insbesondere eignet er sich jedoch für die Lagerung elektrischer Bauteile in einem Gehäuse, das mit feuchten Gasen bis hin zur Taupunktsgrenze gefüllt ist. Dies ist zum Beispiel der Fall bei einem Brennstoffzellenmodul, das in einem Druckbehälter gelagert wird.

Weiterhin eignet sich der erfindungsgemäße Isolator zur (isolierten) Befestigung oder Halterung eines ersten elektrisch leitfähigen Bauteiles an einem zweiten Bauteil

Eine erfindungsgemäße elektrische Einrichtung umfasst ein elektrisches Bauteil, ein Gehäuse und zumindest einen Isolator nach einem der Ansprüche 1 bis 3 zur Halterung oder Befestigung des elektrischen Bauteiles in bzw. an dem Gehäuse.

Bei dem elektrischen Bauteil handelt es sich beispielsweise um ein Brennstoffzellenmodul, einen Elektromotor, einen Schalter, einen Leistungssteller oder einen Transformator.

Bevorzugt umschließt das Gehäuse das elektrische Bauteil gas- und wasserdicht, so dass zum einen kein Wasser oder Gas aus der Umgebung der elektrischen Einrichtung in das Gehäuse eindringen bzw. aus dem Gehäuse an die Umgebung abgegeben werden kann.

Die Isolationseigenschaften des Isolators können besonders vorteilhaft dann genutzt werden, wenn das Gehäuse aus einem elektrisch leitfähigen Material wie z.B. einem Metall besteht. Das Gehäuse kann dann neben einem Schutz des Bauteils vor äußeren Einflüssen, wie z.B. Wasser, auch gleich zur EMV-Abschirmung des elektrischen Bauteils genutzt werden.

Der mit der hydrophoben Oberfläche des Isolators erzielbare hohe Isolationswiderstand kann dann besonders vorteilhaft genutzt werden, wenn der Raum zwischen dem Gehäuse und dem elektrischen Bauteil mit einem feuchten Gas gefüllt ist. In diesem Fall können vergleichsweise kurze Isolationsstrecken zwischen dem Gehäuse und dem elektrischem Bauteil realisiert und somit die elektrische Einrichtung klein und kompakt gehalten werden. Dies gilt insbesondere dann, wenn beim Betrieb der elektrischen Einrichtung die Temperatur des feuchten Gases unter die Taupunkttemperatur des Gases fällt, was zu einer Auskondensation von Wasser an der Oberfläche des Isolators führen würde.

Bevorzugt handelt es sich bei dem feuchten Gas um ein Inertgas oder Schutzgas, beispielsweise Stickstoff.

Wenn das feuchte Gas unter einem Druck steht, der größer ist als der Druck eines Gases innerhalb des elektrischen Bauteils ist, kann bei einem Leck des elektrischen Bauteils kein Gas aus dem elektrischen Bauteil austreten.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigen:
- FIG 1: einen Schnitt durch ein Brennstoffzellenmodul mit erfindungsgemäßen Isolatoren,
- FIG 2: einen der Isolatoren von FIG 1 in vergrößerter Darstellung,
- FIG 3: die Verwendung eines erfindungsgemäßen Isolators zur gegenseitigen Abstützung zweier stromführender Leiter und
- FIG 4: die Verwendung erfindungsgemäßer Isolatoren zur Befestigung von elektrischen Freileitungen.

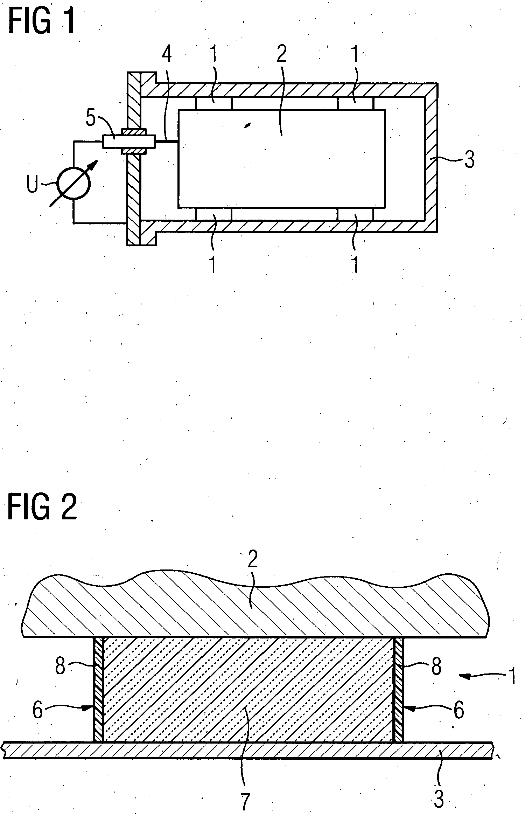

FIG 1 zeigt in vereinfachter Darstellung einen Schnitt durch eine elektrische Einrichtung bestehend aus einem Brennstoffzellenmodul 2, welches mittels Isolatoren 1 in einem Druckbehälter 3 gelagert ist. Der Druckbehälter 3 umschließt das Brennstoffzellenmodul 2 gas- und wasserdicht und dient zum Schutz des Brennstoffzellenmoduls 2 vor mechanischen Beschädigungen und/oder von Umwelteinflüssen und zur Verhinderung des Austretens von Betriebsgasen aus dem Brennstoffzellenmodul an die umgebende Atmosphäre. Ein Stromanschluss 4 ist über einen Durchführungskondensator 5 aus dem Druckbehälter 3 geführt. Aus Sicherheitsgründen muss ein hoher Isolationswiderstand (üblicherweise 10 MΩ) zwischen dem Druckbehälter 3 und dem elektrischen Anschluss 5 vorliegen. Dieser Isolationswiderstand wird beim Betrieb des Brennstoffzellenmoduls in einer Brennstoffzellenanlage mit Hilfe einer Messspannungsquelle U permanent überwacht und bei Unterschreitung eines Grenzwertes die Brennstoffzellenanlage abgeschaltet.

Beim Betrieb des Brennstoffzellenmoduls 2 wird aus Wasserstoff und Sauerstoff elektrische Energie, Wärme und reines Wasser erzeugt. Im Betrieb ist deshalb das Brennstoffzellenmodul 2 und die umgebende Atmosphäre im Druckbehälter 3 warm und feucht. Nach Abschaltung des Brennstoffzellenmoduls 2 kühlt das Brennstoffzellenmodul und damit auch die umgebende Atmosphäre im Druckbehälter 3 auf eine Temperatur bis unter die Taupunkttemperatur ab, die in der Atmosphäre befindliche Feuchtigkeit kondensiert aus und schlägt sich auf den Oberflächen der Isolatoren 1 nieder. Die niederschlagende Feuchtigkeit bildet auf diesen Oberflächen Wassertropfen, die sich zu einem die Oberfläche benetzenden Wasserfilm verbinden, der den Isolationswiderstand der Isolatoren 1 auf 1 MΩ oder weniger senken würde.

Um dies zu verhindern weist jeder der Isolatoren 1, wie in FIG 2 im Detail dargestellt, an den Berührungsstellen mit der Druckbehälteratmosphäre eine hydrophobe Oberfläche 6 auf.

Der Isolator 1 weist hierzu einen Kern 7 aus einem isolierenden, vorzugsweise nicht hydrophoben Material, z.B. aus einem Kunststoff oder Keramikmaterial, auf, der eine hydrophobe Oberflächenbeschichtung 8 aufweist. Der Kern 7 ist hierbei hinsichtlich der für die elektrische Einrichtung gewünschten isolierenden und mechanischen Eigenschaften (z.B. Stoß- und Rüttelfestigkeit) optimiert.

Die hydrophobe Oberflächenbeschichtung 8 besteht ganz oder teilweise aus einem in einem Lösemittel lösbaren, hydrophoben Material. Dieses Material besteht aus einem amorphen Fluoropolymer, insbesondere einer amorphen Modifikation von Teflon (beispielsweise einem amorphen Copolymer aus 65 - 99 Mol % Perfluoro-2,2-Dimethyl-1,3-Dioxol mit einer Komplementärmenge von Tetrafluorethylen, von DuPont Fluoroproducts unter dem Produktnamen Teflon^{®}AF erhältlich).

Die Oberflächenbeschichtung 8 bewirkt, dass die kondensierten Wassertropfen sich nicht zu einem durchgehenden Wasserfilm verbinden, sondern abtropfen oder vereinzelt ohne Verbindung bleiben. Es kann somit auch bei Abkühlung des Brennstoffzellenmoduls 2 und Kondensation der Feuchtigkeit der Atmosphäre in dem Druckbehälter 3 der gewünschte hohe Isolationswiderstand zwischen dem Druckbehälter 3 und den elektrischen Anschlüssen 5 beibehalten werden. Eine Trocknung der Atmosphäre in dem Druckbehälter 3 oder eine Sicherheitsabschaltung des Brennstoffzellenmoduls 2 bei Abkühlung ist somit nicht erforderlich.

Für die Wirksamkeit der hydrophoben Oberflächenbeschichtung kann eine Dicke der Oberflächenbeschichtung im Bereich von Nanometern bis Mikrometern ausreichend sein. Beispielsweise können mit amorphem Teflon geeignete Schichtdicken im Nanometerbereich erreicht werden. Die Dicke muss nur so gewählt sein, dass sie ausreichend wasserabstoßend ist und im zu schützenden Bereich ohne Umterbrechungen aufgebracht wird. Die Wirksamkeit der Beschichtung kann dann einfach durch Benetzung mit reinem Wasser visuell überprüft werden.

Die Erfindung wurde beispielhaft für ein Brennstoffzellenmodul beschrieben, die geschilderten Verhältnisse gelten jedoch gleichermaßen für eine Vielzahl elektrischer Einrichtungen mit einem elektrischen Bauteil, das von einem Gehäuse umschlossen ist und mittels Isolatoren in dem Gehäuse gelagert oder an dem Gehäuse befestigt ist. Hierzu zählen insbesondere gekapselte Elektromotoren, Leistungsschalter, Leistungssteller oder Trocken-Transformatoren.

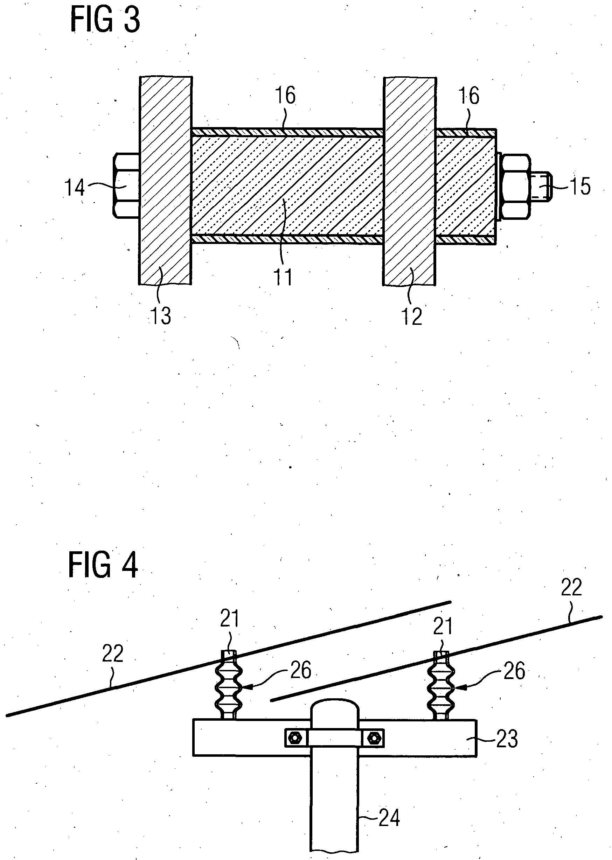

FIG 3 zeigt die Verwendung erfindungsgemäßer Isolatoren 11 mit hydrophoben Oberflächen 16 zur Befestigung und gegenseitigen Abstützung zweier elektrischen Leiter 12, 13. Die beiden Leiter 12, 13 und die Isolatoren 11 werden hierbei mittels einer Schraubverbindung 14, 15 aufeinander gepresst.

FIG 4 zeigt eine Halterung von elektrischen Freileitungen 22 mittels Isolatoren 21 mit hydrophoben Oberflächen 26 an einem Querträger 23 eines Dachständers 24.

## Patentansprüche

1. Isolator (1) mit erhöhter Isolationsfähigkeit, wobei der Isolator (1) zumindest teilweise eine hydrophobe Oberfläche (6) aufweist, wobei der Isolator (1) aus einem isolierenden, vorzugsweise nicht hydrophoben, Material mit einer hydrophoben Oberflächenbeschichtung (8) besteht,
**dadurch gekennzeichnet, dass** die hydrophobe Oberflächenbeschichtung (8) aus einem in einem Lösemittel lösbaren, hydrophoben Material besteht, wobei das hydrophobe Material ganz oder teilweise aus einem amorphen Fluoropolymer besteht.

2. Isolator (1) nach Anspruch 1,
**dadurch gekennzeichnet, dass** das amorphe Fluoropolymer eine amorphe Modifikation von Teflon ist.

3. Isolator (1) nach einem der Ansprüche 1 bis 2,
**dadurch gekennzeichnet, dass** die hydrophobe Oberflächenbeschichtung (45) eine Dicke im Bereich von Nanometern bis Mikrometern aufweist.

4. Verwendung des Isolators (1) nach einem der Ansprüche 1 bis 3 zur Lagerung eines elektrischen Bauteiles (2) in einem Gehäuse (3), insbesondere einem Gehäuse, das mit feuchten Gasen bis hin zur Taupunktsgrenze gefüllt ist.

5. Verwendung des Isolators (1) nach einem der Ansprüche 1 bis 3 zur Befestigung eines ersten elektrisch leitfähigen Bauteiles (12) an einem zweiten Bauteil (13).

6. Verwendung des Isolators (1) nach einem der Ansprüche 1 bis 3 zur Halterung eines ersten elektrisch leitfähigen Bauteiles (22) an einem zweiten Bauteil (23).

7. Elektrische Einrichtung umfassend ein elektrisches Bauteil (2), ein Gehäuse (3) und zumindest einen Isolator (1) nach einem der Ansprüche 1 bis 3 zur Halterung oder Befestigung des elektrischen Bauteiles (2) in bzw. an dem Gehäuse (3).

8. Elektrische Einrichtung nach Anspruch 7,
**dadurch gekennzeichnet, dass** das Gehäuse (3) das elektrische Bauteil (2) gas- und wasserdicht umschließt.

9. Elektrische Einrichtung nach Anspruch 7 oder 8,
**dadurch gekennzeichnet, dass** das Gehäuse (3) aus einem elektrisch leitfähigen Material besteht.

10. Elektrische Einrichtung nach einem der Ansprüche 7 bis 9,
**dadurch gekennzeichnet, dass** ein Raum zwischen dem Gehäuse (3) und dem elektrischen Bauteil (2) mit einem feuchten Gas gefüllt ist.

11. Elektrische Einrichtung nach Anspruch 10,
**dadurch gekennzeichnet, dass** beim Betrieb der elektrischen Einrichtung die Temperatur des feuchten Gases unter die Taupunkttemperatur des feuchten Gases fällt.

12. Elektrische Einrichtung nach einem der Ansprüche 10 bis 11,
**dadurch gekennzeichnet, dass** das feuchte Gas unter einem Druck steht, der größer ist als der Druck eines Gases innerhalb des elektrischen Bauteils (2) ist.

13. Elektrische Einrichtung nach einem der Ansprüche 7 bis 12,
**dadurch gekennzeichnet, dass** das elektrische Bauteil ein Brennstoffzellenmodul, ein Elektromotor, ein Schalter, ein Leistungssteller oder ein Transformator ist.

14. Verfahren zur Herstellung eines Isolators (1) nach einem der Ansprüche 1 bis 3,
**dadurch gekennzeichnet, dass** das hydrophobe Material in einem gelösten Zustand auf das isolierende Material aufgebracht wird.

## Claims

1. Insulator (1) with enhanced insulating capacity,
with the insulator (1) at least partially featuring a hydrophobic surface (6), with the insulator (1) consisting of an insulating, preferably non-hydrophobic, material with a hydrophobic surface coating (8),
**characterised in that** the hydrophobic surface coating (8) consists of a hydrophobic material that can be dissolved in a solvent, wherein the hydrophobic material consists wholly or partially of an amorphous fluoropolymer.

2. Insulator (1) according to claim 1,
**characterised in that** the amorphous fluoropolymer is an amorphous Teflon modification.

3. Insulator (1) according to one of claims 1 to 2,
**characterised in that** the hydrophobic surface coating (45) has a thickness in the range of nanometres to micrometres.

4. Use of the insulator (1) according to one of claims 1 to 3 to support an electrical assembly (2) in a housing (3), in particular a housing filled with moist gas to the dew point limit.

5. Use of the insulator (1) according to one of claims 1 to 3 to secure a first electrically conductive assembly (12) to a second assembly (13).

6. Use of the insulator (1) according to one of claims 1 to 3 to mount a first electrically conductive assembly (22) on a second assembly (23).

7. Electrical facility comprising an electrical assembly (2), a housing (3) and at least one insulator (1) according to one of claims 1 to 3 to mount or secure the electrical assembly (2) in or on the housing (3).

8. Electrical facility according to claim 7,
**characterised in that** the housing (3) encloses the electrical assembly (2) in a gas-tight and water-tight manner.

9. Electrical facility according to claim 7 or 8,
**characterised in that** the housing (3) consists of an electrically conductive material.

10. Electrical facility according to one of claims 7 to 9,
**characterised in that** a space between the housing (3) and the electrical assembly (2) is filled with a moist gas.

11. Electrical facility according to claim 10,
**characterised in that** during operation of the electrical facility the temperature of the moist gas drops below the dew point temperature of the moist gas.

12. Electrical facility according to one of claims 10 to 11,
**characterised in that** the moist gas is at a pressure greater than the pressure of a gas inside the electrical assembly (2).

13. Electrical facility according to one of claims 7 to 12,
**characterised in that** the electrical assembly is a fuel cell module, an electric motor, a switch, a power controller or a transformer.

14. Method for manufacturing an insulator (1) according to one of claims 1 to 3,
**characterised in that** the hydrophobic material is applied to the insulating material in a dissolved state.

## Revendications

1. Isolateur ( 1 ) à capacité d'isolation augmentée, l'isolateur ( 1 ) ayant au moins une surface ( 6 ) hydrophobe, l'isolateur ( 1 ) étant en une matière isolante, de préférence non hydrophobe, ayant un revêtement ( 8 ) de surface hydrophobe,
**caractérisé en ce que** le revêtement ( 8 ) de surface hydrophobe est en une matière hydrophobe soluble dans un solvant, la matière hydrophobe étant en tout ou partie en un polymère fluoré amorphe.

2. Isolateur suivant la revendication 1,
**caractérisé en ce que** le polymère fluoré amorphe est une forme amorphe du téflon.

3. Isolateur suivant l'une des revendications 1 à 2,
**caractérisé en ce que** le revêtement ( 45 ) de surface hydrophobe a une épaisseur dans la plage des nanomètres aux micromètres.

4. Utilisation de l'isolateur ( 1 ), suivant l'une des revendications 1 à 3 pour le montage d'un composant ( 2 ) électrique dans un boîtier ( 3 ), notamment dans un boîtier qui est empli de gaz humide jusqu'à la limite du point de rosée.

5. Utilisation de l'isolateur ( 1 ), suivant l'une des revendications 1 à 3 pour la fixation d'un premier composant ( 12 ) conducteur de l'électricité à un deuxième composant ( 13 ).

6. Utilisation de l'isolateur ( 1 ), suivant l'une des revendications 1 à 3 pour le maintien d'un premier composant ( 22 ) conducteur de l'électricité à un deuxième composant ( 23 ).

7. Dispositif électrique comprenant un composant ( 2 ) électrique, un boîtier ( 3 ) et au moins un isolateur ( 1 ) suivant l'une des revendications 1 à 3 pour le maintien ou la fixation du composant ( 2 ) électrique dans ou sur le boîtier ( 3 ).

8. Dispositif électrique suivant la revendication 7,
**caractérisé en ce que** le boîtier ( 3 ) entoure le composant ( 2 ) électrique d'une manière étanche au gaz et à l'eau.

9. Dispositif électrique suivant la revendication 7 ou 8,
**caractérisé en ce que** le boîtier ( 3 ) est en un matériau conducteur de l'électricité.

10. Dispositif électrique suivant l'une des revendications 7 à 9,
**caractérisé en ce qu'**un espace entre le boîtier ( 3 ) et le composant ( 2 ) électrique est empli d'un gaz humide.

11. Dispositif électrique suivant la revendication 10,
**caractérisé en ce que**, lorsque le dispositif électrique fonctionne, la température du gaz humide devient inférieure à la température de rosée du gaz humide.

12. Dispositif électrique suivant l'une des revendications 10 à 11,
**caractérisé en ce que** le gaz humide est sous une pression qui est plus grande que la pression d'un gaz à l'intérieur du composant ( 2 ) électrique.

13. Dispositif électrique suivant l'une des revendications 7 à 12,
**caractérisé en ce que** le composant électrique est un module de pile à combustible, un moteur électrique, un interrupteur, un régleur de puissance ou un transformateur.

14. Procédé de fabrication d'un isolateur ( 1 ) suivant l'une des revendications 1 à 3,
**caractérisé en ce que** l'on dépose la matière hydrophobe à l'état dissout sur la matière isolante.
